# EUROPEAN PATENT APPLICATION

(11) **EP 4 628 432 A1**
(43) Date of publication of application: **08.10.2025**
(21) Application number: 25167654.0
(22) Date of filing: 01.04.2025
(51) Int. Cl.: B65G 37/00, B65G 47/56, B65G 47/84, B65G 47/91

(54) **UNIT AND METHOD FOR CONVEYING PRODUCTS, IN PARTICULAR CIGARETTE PACKS**

(30) Priority: 05.04.2024 IT 202400007648
(71) Applicant: G.D S.p.A., 40133 Bologna (IT)
(72) Inventor: CACCIARI, Valerio, 40133 BOLOGNA (IT)
(74) Representative: Studio Torta S.p.A.

(57) **Abstract**

A method and unit for conveying products (2), in particular cigarette packs, according to which the products (2) are transferred in succession between two conveyor devices (7, 12) connected to each other at a transfer station (13) using a transferring device (26) provided with a sucking gripping head (28) mounted on a support arm (27) and movable with two motion components (C1, C2) distinct from each other.

## Description

### CROSS-REFERENCE TO RELATED APPLICATIONS

This patent application claims priority from Italian patent application no. 102024000007648 filed on April 5, 2024, the entire disclosure of which is incorporated herein by reference.

### TECHNICAL FIELD

This invention relates to a unit for conveying products, in particular cigarette packs.

### BACKGROUND

This invention finds particularly advantageous application in the feeding of a succession of cigarette packs exiting from a cellophane-wrapping machine to a feeding line for heating and stabilising the outer cellophane overwrap applied to each cigarette pack, to which the following discussion will make explicit reference without any loss of generality thereby.

In the cigarette production and packaging sector, it is known to provide a conveyor unit comprising a first conveyor device connected to a cellophane-wrapping machine to receive a succession of cigarette packs wrapped in their respective outer cellophane overwraps; a second conveyor device; a transfer station connecting the two conveyor devices; and a heating device connected with the second conveyor device to heat and stabilise the outer overwraps of the cigarette packs.

Generally, the first conveyor device comprises a belt conveyor, which has a substantially horizontal transport branch for the cigarette packs, and is configured to advance the cigarette packs in succession to the transfer station in a first, substantially horizontal direction transverse to the longitudinal axes of the cigarettes of each cigarette pack.

The second conveyor device normally comprises a vertical pocket conveyor comprising, in turn, two belt conveyors, which extend in a second substantially vertical forward direction transverse to the first forward direction, and have respective transport branches, which face each other, and cooperate with each other to define a plurality of pockets configured to receive and hold a respective cigarette pack each.

The two belt conveyors of the second conveyor device are arranged at a distance from each other substantially equal to a height of the cigarette packs measured parallel to the longitudinal axes of the cigarettes, and are provided with multiple lifting elements, each of which defines, together with a corresponding lifting element of the other belt conveyor, a corresponding pocket.

The heating device comprises two belt conveyors, which are arranged on opposite sides of the pockets of the second conveyor device in the first forward direction so as to engage corresponding side faces of the cigarette packs, extend perpendicular to the first forward direction, and are heated so as to stabilise the outer overwraps of the cigarette packs.

The conveyor unit also includes a transferring device to transfer the cigarette packs from the first conveyor device to the second conveyor device in the first forward direction.

The transferring device comprises two transfer wheels, which are arranged on opposite sides of the belt conveyor of the first conveyor device, are mounted to rotate around their respective vertical rotation axes parallel to each other, and are phased with the pockets of the pocket conveyor of the second conveyor device.

The transfer wheels engage the first cigarette pack of a row of cigarette packs moved forward from the first conveyor device substantially in contact with each other, separate it from the row of cigarette packs, and feed it into a corresponding pocket of the pocket conveyor.

The transfer wheels cooperate with an end-of-travel component mounted in the transfer station downstream of the pocket conveyor in the first forward direction and configured to stop each cigarette pack within its corresponding pocket.

Known conveyor units of the type described above have a number of drawbacks mainly resulting from the fact that the thrust exerted by the transfer wheels on the cigarette packs causes the cigarette packs to bounce against the end-of-travel component, compromising and failing to guarantee the correct position of the cigarette packs within the pockets of the second conveyor unit.

### SUMMARY

The object of this invention is to provide a unit for conveying products, in particular cigarette packs, that is free of the drawbacks described above and is simple and economical to manufacture.

According to this invention, a unit for conveying products, in particular cigarette packs, as claimed in claims 1 to 11 is provided.

This invention further relates to a method for conveying products, in particular cigarette packs.

According to this invention, a method for conveying products, in particular cigarette packs, as claimed in claims 12 to 15 is provided.

### BRIEF DESCRIPTION OF THE FIGURES

This invention will now be described with reference to the attached drawings that illustrate a non-limiting embodiment thereof, in which:
Figure 1 is a schematic perspective view, with parts removed for clarity, of a preferred embodiment of the conveying unit of this invention;
Figure 2 is a schematic side view, with parts removed for clarity, of the conveying unit in Figure 1; and
Figure 3 schematically shows the principle of operation of a detail of the conveying unit in Figure 1.

### DESCRIPTION OF EMBODIMENTS

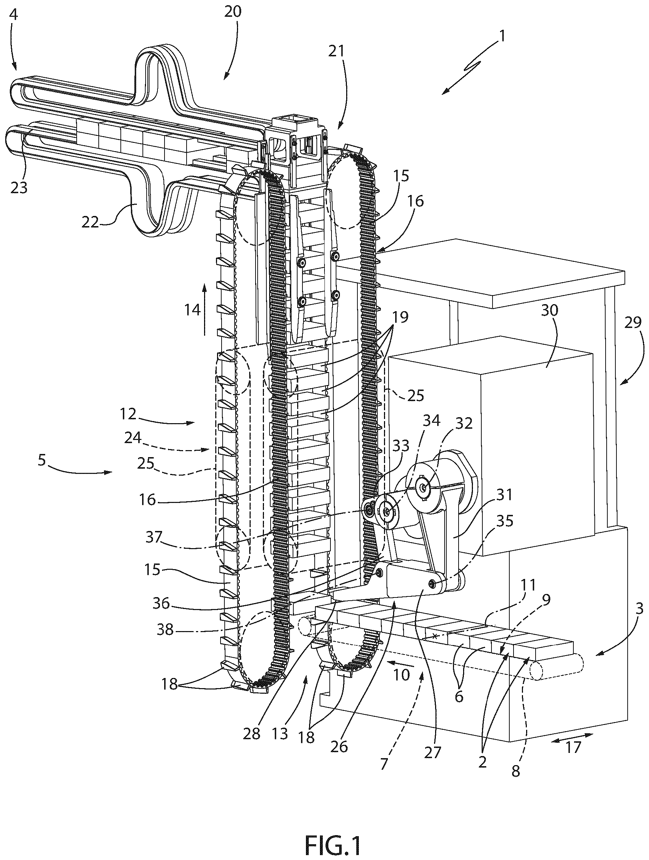

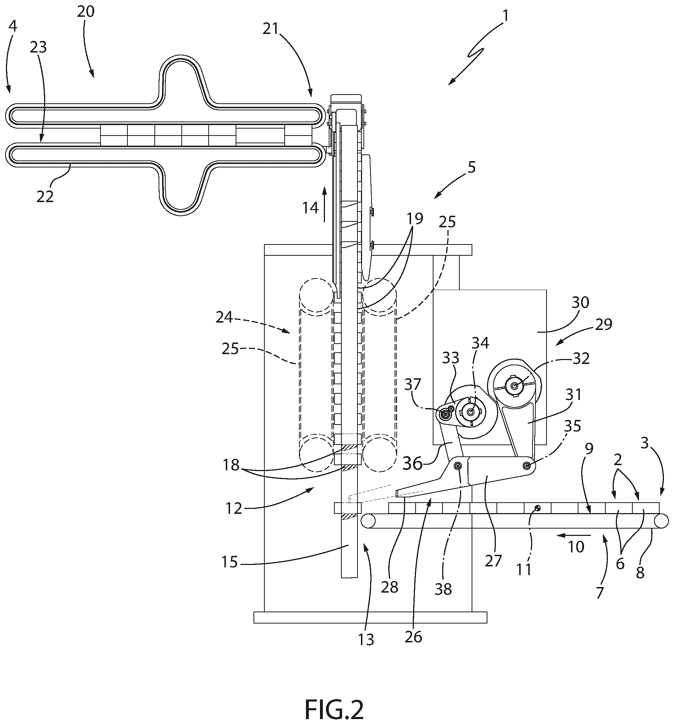

With reference to Figures 1 and 2, the reference number 1 denotes, as a whole, a unit for conveying products, each of which is defined, in this case, by a cigarette pack 2, from an inlet station 3 to an outlet station 4 of a feeding line 5.

The station 3 is connected to the outlet of a known, non-shown cellophane-wrapping machine configured to wrap each pack 2 in an outer cellophane overwrap 6.

The unit 1 comprises a first conveyor device 7 comprising, in turn, a belt conveyor 8 that has a substantially horizontal transport branch 9 for moving a succession of packs 2 arranged in contact with each other forward in a substantially horizontal forward direction 10 and, in this case, transverse to the longitudinal axes 11 of the cigarettes (not illustrated) of the packs 2.

The unit 1 is further provided with a second conveyor device 12, which is connected with the device 7 at a transfer station 13, and is configured to successively move the packs 2 forward in a forward direction 14 that is substantially vertical and transverse to the direction 10.

The device 12 comprises two belt conveyors 15, which extend in the direction 14, and have respective transport branches 16 facing each other and perpendicular to a horizontal direction 17 orthogonal to the directions 10 and 14.

Each conveyor 15 is provided with a plurality of lifting elements 18, which are uniformly distributed along the conveyor 15, and are phased with corresponding elements 18 of the other conveyor 15 to define a plurality of pockets 19 configured to receive and retain a respective pack 2 each.

The unit 1 further comprises a third conveyor device 20, which is connected with the device 12 at a transfer station 21, comprises, in turn, a belt conveyor 22 that has a substantially horizontal transport branch 23 to successively move the packs 2 forward from the station 21 to the station 4 in the direction 10.

The device 12 cooperates with a heating device 24 comprising two belt conveyors 25, which are mounted on opposite sides of the pockets 19 in the direction 10, extend in the direction 14 and perpendicularly to the direction 10, are arranged substantially in contact with relative smaller side faces of the packs 2, and are heated so as to stabilise the outer overwraps 6 of the packs 2 using heat shrinking.

Finally, the unit 1 comprises a transferring device 26 to transfer the packs 2 from the device 7 to the device 12 at the station 13.

The device 26 comprises, in turn, an elongated support arm 27 provided with a sucking gripping head 28 for transferring the products 2 in succession from the device 7 to the device 12.

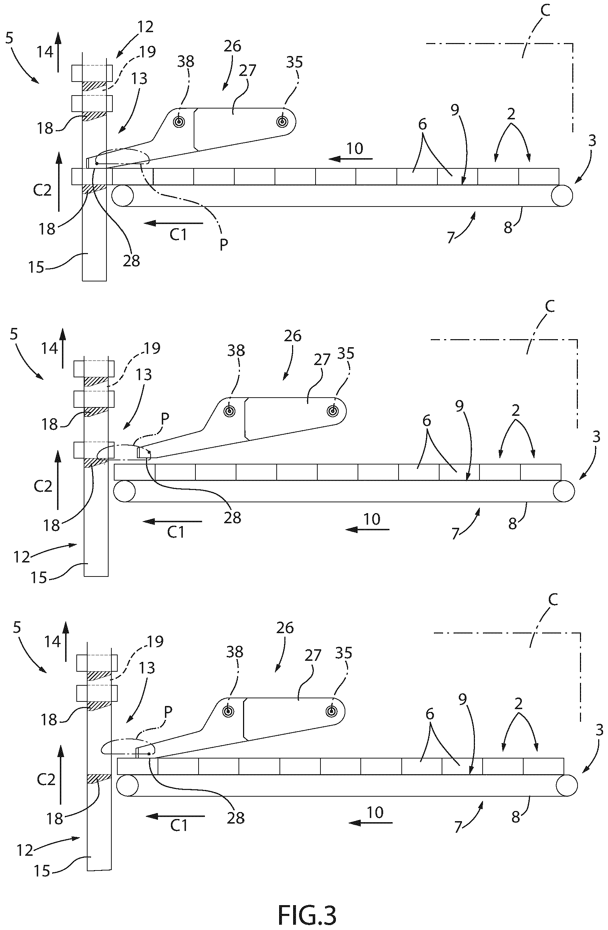

As shown in Figures 2 and 3, the arm 27 and head 28 are moved by an operating device 29 with a first motion component C1 and a second motion component C2 distinct from each other.

The components C1, C2 are linear and parallel to the direction 10 and direction 14, respectively, and allow the head 28 to be moved along a closed-ring path P extending across a substantially vertical containing plane C perpendicular to the direction 17.

The device 29 comprises a support frame 30; a first crank 31 rotatably coupled to the frame 30 to oscillate about a rotation axis 32 parallel to the direction 17 under the thrust of a first electric motor (not shown) housed within the frame 30; and a second crank 33 rotatably coupled to the frame 30 to oscillate about a rotation axis 34 parallel to the direction 17 under the thrust of a second electric motor (not shown) housed within the frame 30 itself.

The arm 27 is rotatably coupled to the crank 31 to rotate, with respect to the crank 31, about a rotation axis 35 parallel to the axis 32, and is coupled to the crank 33 by means of the interposition of a connecting rod 36 extending between two rotation axes 37, 38, the axis 37 being the rotation axis between the crank 33 and the connecting rod 36 and the axis 38 being the rotation axis between the arm 27 and the connecting rod 36.

The device 29 is configured so as to:
give the cranks 31, 33 respective alternative oscillatory motions about their axes 32, 34; and
allow the head 28 to release each pack 2 into its pocket 19 when the component C1, i.e. the motion component parallel to the direction 10, is zero.

The unit 1 has certain advantages mainly stemming from the fact that, when the packs 2 are released into the relevant pockets 19, the component C1 is zero and guarantees a correct and precise transfer of the packs 2 into the device 12.

According to a variant not shown, the unit 1 also comprises a third conveyor device, which is mounted between the devices 7 and 12, is connected to the devices 7 and 12 at respective transfer stations, and comprises, in turn, a belt conveyor that has a substantially horizontal transport branch.

In this case, the transfer device 26 is arranged to transfer the packs 2 from the device 7 to the aforementioned third conveyor device.

According to another variant not shown, the path P is configured to allow the head 28 to disengage the packs 2 from the conveyor 8 of the device 7 by lifting them in the direction 14 and preventing them from sliding on the device 7 and/or the above-mentioned third conveyor device in the direction 10.

## Claims

1. A unit for conveying products (2), in particular cigarette packs, the unit comprising a first conveyor device (7) and a second conveyor device (12) defining a feeding line (5) for a succession of products (2); a transfer station (13) connecting said first and second conveyor devices (7, 12) to one another; and a transferring device (26) provided with a sucking gripping head (28) to transfer, in succession, the products (2) from the first conveyor device (7) to the second conveyor device (12); and being **characterized in that** said sucking gripping head (28) is mounted on a support arm (27) of the transferring device (26); an operating device (29) being provided to move the support arm (27) and the sucking gripping head (28) with a first motion component (C1) and a second motion component (C2), which are distinct from one another.

2. The unit according to claim 1, wherein said first and second motion components (C1, C2) are linear.

3. The unit according to claim 1 or 2, wherein said first and second motion components (C1, C2) are transverse to one another.

4. The unit according to any one of the preceding claims, wherein the operating device (29) is configured to move the sucking gripping head (28) along a closed-ring path (P) extending in a substantially vertical containing plane (C) .

5. The unit according to any one of the preceding claims, wherein the operating device (29) is configured so that the first, in particular horizontal, motion component (C1) of the sucking gripping head (28) substantially is zero during the release of the product (2) onto the second conveyor device (12).

6. The unit according to any one of the preceding claims, wherein the operating device (29) is configured so that the second, in particular vertical, motion component (C2) of the sucking gripping head (28) is different from zero during the release of the product (2) onto the second conveyor device (12).

7. The unit according to any one of the preceding▪claims, wherein said first and second conveyor devices (7, 12) are configured to feed, in succession, the products (2) in a first feeding direction (10) and in a second feeding direction (14), respectively.

8. The unit according to claim 7, wherein, at least in the area of the transfer station (13), the first feeding direction (10) is horizontal and the second feeding direction (14) is horizontal or vertical.

9. The unit according to any one of the preceding claims, wherein the second conveyor device (12) is provided with a plurality of pockets (19) configured to each receive a relative product (2).

10. The unit according to any one of the claims from 1 to 8 and further comprising a third conveyor device (12) and a further transfer station connecting said second and third conveyor devices to one another.

11. The unit according to any one of the preceding claims, wherein the third conveyor device (12) is provided with a plurality of pockets (19) configured to each receive a relative product (2).

12. A method for conveying products (2), in particular cigarette packs, in a conveying unit comprising a first conveyor device (7) and a second conveyor device (12) connected to one another in the area of a transfer station (13); and a transferring device (26) provided with a sucking gripping head (28) to transfer, in succession, the products (2) from the first conveyor device (7) to the second conveyor device (12); the method being **characterized in that** it comprises the step of moving the sucking gripping head (28) by means of a support arm (27) with a first motion component (C1) and a second motion component (C2), which are distinct from one another.

13. The method according to claim 12, wherein the sucking gripping head (28) is moved by the support arm (27) along a closed-ring path (P) extending in a substantially vertical containing plane (C).

14. The method according to claim 12 or 13, wherein, at least in the area of the transfer station (13), the first conveyor device (7) extends in a first, substantially horizontal feeding direction (10) and the second conveyor device (12) extends in a second, substantially vertical feeding direction (14); the sucking gripping head (28) being moved so as to release the products (2) onto the second conveyor device (12), when the first motion component (C1) is zero.

15. The method according to any one of the claims from 12 to 14, wherein, at least in the area of the transfer station (13), the first conveyor device (7) extends in a first, substantially horizontal feeding direction (10); the sucking gripping head (28) being moved so as to lift the products (2) and disengage them from the first conveyor device (7).
